Europäisches Patentamt

European Patent Office

Office européen des brevets

(11) Veröffentlichungsnummer: **0 173 260**
**B1**

(12) **EUROPÄISCHE PATENTSCHRIFT**

(45) Veröffentlichungstag der Patentschrift:
22.03.89

(21) Anmeldenummer: **85110587.4**

(22) Anmeldetag: **23.08.85**

(51) Int. Cl.⁴: **B 63 B 35/44**

(54) **Schwimmkörper.**

(30) Priorität: **28.08.84 DE 3431510**

(43) Veröffentlichungstag der Anmeldung:
**05.03.86 Patentblatt 86/10**

(45) Bekanntmachung des Hinweises auf die Patenterteilung:
**22.03.89 Patentblatt 89/12**

(84) Benannte Vertragsstaaten:
**AT BE CH DE FR GB IT LI NL**

(56) Entgegenhaltungen:
**DE-A- 2 415 279**
**DE-A- 2 905 759**
**GB-A- 594 784**
**US-A- 3 307 513**

(73) Patentinhaber: **Bech, Werner, Kleistrasse 2,
D-4540 Lengerich i.W. (DE)**

(72) Erfinder: **Bech, Werner, Kleistrasse 2, D-4540 Lengerich
i.W. (DE)**

(74) Vertreter: **Busse & Busse Patentanwälte, Postfach 1226,
D-4500 Osnabrück (DE)**

## Beschreibung

Die Erfindung betrifft einen Schwimmkörper, bestehend aus einem schwimmfähigen Trägerkörper aus miteinander verbundenen, geschlossenen Rohren für eine Abstützung eines Substrats zur Aufnahme von Pflanzen.

Bei einem bekannten Schwimmkörper dieser Art (DE-A-2 905 759) bilden die Rohre des Trägerrahmens einen Rahmen, an dem eine schalenförmige, wasserdurchlässige Matte befestigt ist, die als Aufnahmebett für das Substrat dient, welches für die Aufnahme der Pflanzen ein chemisch inertes mineralisches Material geringer Dichte und Wasseraufnahmefähigkeit ist. Die Matte ist dabei mit besonderen Öffnungen für die Einbringung der Pflanzen versehen. Dieser bekannte Schwimmkörper ist nicht sehr belastbar und zur Verwendung mit in gewohnter Weise landwirtschaftlich nutzbarem Erdreich vorgesehen; er dient als sog. Schwimmkampe vorwiegend Zwekken der Wasserwirtschaft, der Landschaftspflege und des Naturschutzes.

Bei einem weiteren bekannten Schwimmkörper (US-A-3 307 513) mit einem schwimmfähigen Trägerkörper besteht dieser aus in ihrer gemeinsamen waagrechten Durchmesserebene miteinander verbundenen, geschlossenen Rohren, wobei die oberhalb der Verbindungsebene liegenden Rohraussenflächen eine oberseitige Auflagerfläche darbieten. Dieser Schwimmkörper ist als Lastkahn zur Beförderung von Lasten insbesondere in Häfen, auf Flüssen und dgl. Gewässern ausgebildet. Hierzu ist der Schwimmkörper mit einem Schiffsboden versehen, dessen Balkenkonstruktion auf den Rohren des Trägerkörpers abgestützt ist. Die dabei von den Rohren dargebotene oberseitige Auflagerfläche ist auf schmale Längsstreifen im Bereich der oberen Scheitellinien der Rohrwände und, wiederum schmale, kurze Querbereiche der Rohraussenflächen beidseits der oberen Scheitellinien begrenzt, die von U-Eisen und Knotenblechen als Auflager für die Balkenkonstruktion des Schiffsbodens eingenommen werden. Die Verbindung zwischen den einander gegenüberliegenden Rohrwandbereichen ist bei diesem bekannten Lastkahn von vergleichsweise kurzen Abschnitten eines I-Profil-Trägers gebildet, die in Längsrichtung mit Abstand voneinander angeordnet sind und Schlitze zwischen benachbarten Rohren des Trägerkörpers bilden, durch die Wasser zum Ausgleich des auf die Rohre wirkenden äusseren Wasserdrucks hindurchtreten kann. Für eine Verwendung als nutzbare Insel mit auf dem Trägerkörper abgestütztem Erdreich ist der bekannte Schwimmkörper weder vorgesehen noch geeignet.

Durch die DE-A-2 415 279 ist zwar schon der Gedanke bekannt geworden, Grosspontone bzw. eine Pontoninsel mit Mutterboden zu belegen und so die Insel landwirtschaftlich nutzbar und von Menschen bewohnbar zu machen, jedoch ohne dass dabei näher angegeben ist, wie ein solcher Grossponton konstruktiv beschaffen und ausgebildet sein muss, um als künstliche Insel mit landwirtschaftlich nutzbaren Erdreich geeignet zu sein.

Der Erfindung liegt die Aufgabe zugrunde, einen Schwimmkörper der eingangs angegebenen Art als nutzbare Insel mit bepflanzbarem Erdreich auszubilden und dabei insbesondere eine sichere Abstützung und Festlegung des Erdreichs auf den Rohren des Trägerkörpers zu gewährleisten.

Diese Aufgabe wird nach der Erfindung dadurch gelöst, dass der Trägerkörper im wesentlichen von parallelen, dicht nebeneinanderliegenden Rohren gebildet ist, die im Bereich ihrer gemeinsamen waagrechten Durchmesserebene mit längsverlaufenden wasserabweisenden Abdichtmitteln beispielsweise in Form von Sonderbeton zwischen den einander gegenüberliegenden Rohraussenflächen versehen sind, die gemeinsam mit den Oberflächen der Abdichtmittel zur Ausbildung des Schwimmkörpers als nutzbare Insel Verankerungszwickel für auf dem Trägerkörper als nutzbare Insel Verankerungszwickel für auf dem Trägerkörper als Substrat abgestütztes, bepflanzbares Erdreich bilden, und dass der Trägerkörper hochgezogene Bordwände zur seitlichen Begrenzung des Erdreichs aufweist. Bei dieser Ausgestaltung vermitteln die dicht nebeneinanderliegenden parallelen Rohre dem Trägerkörper eine hohe Belastbarkeit, so dass insoweit die Voraussetzungen für eine landwirtschaftliche Nutzung in gewohnter Weise, z.B. unter Einsatz landwirtschaftlicher Geräte oder Maschinen, geschaffen sind. Die längs den Rohren verlaufenden wasserabweisenden Abdichtmittel verhindern einen Wasserdurchtritt zwischen den Rohren nach oben, und die gesamte Rohraussenfläche oberhalb der waagrechten Durchmesserebene der Rohre bildet eine oberseitige Auflagerfläche für das Erdbereich, in die auch die Oberseiten der Abdichtmittel z.B. in Form von Sonderbeton einbezogen sind. Der besondere Vorteil dieser Auflagerflächengestaltung besteht darin, dass die Verankerungsmittel gebildet sind, die eine vollkommene Abstützung und Verankerung des Erdreichs auf dem Trägerkörper in einem solchen Umfang gewährleisten, dass das Erdreich in entsprechend hoher Schichtdicke aufbringbar und im Verein mit den hochgezogenen Bordwänden des Trägerkörpers auf diesem auf Dauer sicher festlegbar ist. Der in der erfindungsgemässen Weise als nutzbare Insel ausgebildete Schwimmkörper kann damit im wesentlichen in normaler, vom Festland her gewohnter Weise genutzt werden, indem das Erdreich mit einer ausreichenden Schichtdicke von beispielsweise 0,5 bis 1 m auf dem Trägerkörper abgelagert wird, der einerseits die Schwimmfähigkeit der Insel gewährleistet und sie andererseits in gewohnter Weise begehbar macht sowie erforderlichenfalls mit seinen Rohren geeigneten Wohnraum darbietet. Dabei können die Rohre des Trägerkörpers ferner auch zur Lagerhaltung oder auf andere Weise benutzt werden. Eine Verankerung der Insel kann im allgemeinen durch Seile oder Ketten vorgenommen werden.

Die künstliche, schwimmende Insel nach der Erfindung ist in Stauseen, Frischwasserseen, langsam laufenden Flüssen, aber auch in Fjorden, Hafen, Lagunen und Meeresbuchten, wenn die dort auftretende Wellenbildung und die Vegetation der Insel ein kurzzeitiges Überspülen zulassen, vorgesehen. Die Insel kann dabei in einer Grössenordnung von etwa 1 ha ausgeführt sein, wobei sich die verschiedensten Verwendungsmöglichkeiten für die Insel, z.B. als Freizeitort, Versuchsgelände, Vorratslager, Notunterkunft und dgl., eröffnen.

Weitere Ausgestaltungen der Erfindung ergeben sich aus den Unteransprüchen. In der nachstehenden Beschreibung ist die Erfindung in Verbindung mit der Zeichnung näher erläutert, in der mehrere Ausführungsbeispiele zum Gegenstand der Erfindung schematisch veranschaulicht sind. In der Zeichnung zeigen:

Fig. 1 einen Querschnitt durch eine künstliche, schwimmende Insel mit einem von geschlossenen Rohren gebildeten Trägerkörper,

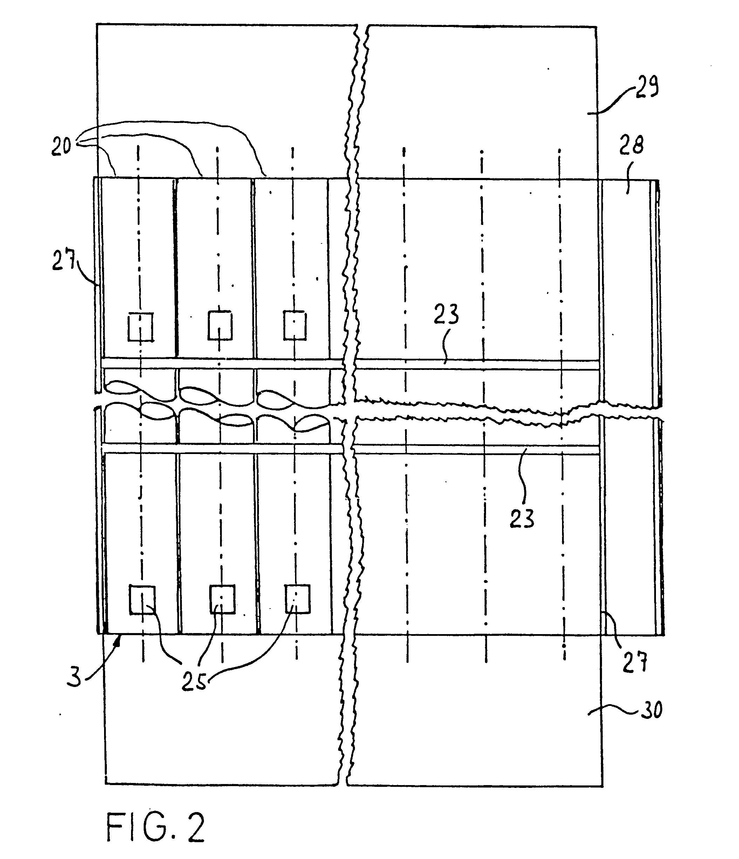

Fig. 2 eine Draufsicht auf den Trägerkörper nach Fig. 1 unter Fortlassung des Erdreichs.

Fig. 3 einen Längsschnitt durch eine Einzelheit des Trägerkörpers nach den Fig. 1 und 2.

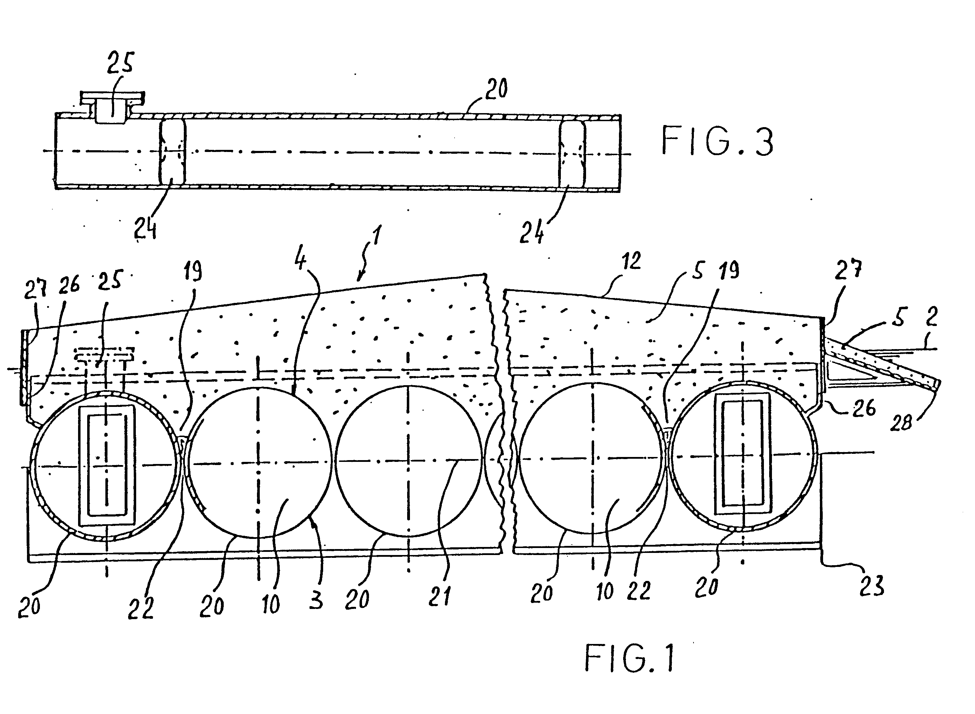

Die Fig. 1 zeigt eine künstliche Insel 1, die in einem Gewässer schwimmt, dessen Oberfläche mit 2 bezeichnet ist. Die Insel 1 ist von einem Trägerkörper 3 gebildet, der oberseitig eine Auflagefläche 4 für Erdreich 5 in einer Schichtdicke von etwa 0,5 bis 0,8 m darbietet. Der Trägerkörper 3 ist im wesentlichen von parallelen, dicht nebeneinanderliegenden Rohren 20 gebildet, die in Längsrichtung des Trägerkörpers 3 verlaufende Kammern 10 definieren. Etwa im Bereich ihrer gemeinsamen waagrechten Durchmesserebene 21 sind die Rohre 20 mit längsverlaufenden Abdichtmitteln 22 aus wasserabweisendem Material, wie Sonderbeton, zwischen den einander gegenüberliegenden Rohrwandbereichen benachbarter Rohre 20 versehen. Die Abdichtmittel 22 schaffen eine Verbindung zwischen den gegenüberliegenden Aussenwandbereichen der benachbarten Rohre 20 und bilden mit den die Auflagerfläche 4 darbietenden Bereichen der Rohrwände oberhalb der Abdichtmittel 22 Verankerungszwickel 19 für das Erdreich 5. Die Rohre 20 sind stirnseitig in geeigneter Weise z.B. von über die Breite der Insel 1 durchgehenden Stirnwänden abdichtend verschlossen und im übrigen bei dem dargestellten Beispiel durch Querschotte 23 in einzelne Längsräume unterteilt. Für die Montage der Rohre 20 zur Bildung des Trägerkörpers 3 können diese z.B. mittels aufblasbarer Zylinderbälge 24 sowie im unteren Teil festgelegter Gewichte schwimmstabil gemacht werden, um eine Montage auf dem Wasser zu ermöglichen. Die Zylinderbälge 24 können nach Durchführung der Montage durch Luftablassen zusammengelegt und aus in den Rohren 20 vorgesehenen Mannlöchern 25 entfernt werden. Die Abschottung der Rohre 20 kann aber auch durch geteilte Querwände erfolgen.

Die Rohre 20 bestehen vorzugsweise aus einem geeigneten Stahl, wobei der Trägerkörper unter Einbeziehung der stirnseitigen Abschlusswände und der Querschotte durch Verschweissung gebildet werden kann. Dabei weisen die beiden äusseren Rohre 20 senkrecht nach oben abgewinkelte Zwischenwände 26 auf, an denen seitliche Bordwände 27 zur Begrenzung des Erdreichs 5 befestigt sind, die durch stirnseitige Bordwände vervollständigt sein können. Sämtliche Bordwände, die das gegebenenfalls von Entwässerungsrohren durchzogene Erdreich 5, dessen Oberfläche 12 vorzugsweise leicht gewölbt ist, seitlich begrenzen, bestehen zumindest bereichsweise, und zwar auf ihrer Aussenseite, aus einem nicht erodierenden und korridierenden Werkstoff, insbesondere einem geeigneten Kunststoff.

Bei dem dargestellten Ausführungsbeispiel sind an den Aussenseiten der seitlichen Bordwände 27 Uferplatten 28 befestigt, die zum Wasser leicht abfallen und von gebördelten Blechen gebildet sein können, auf denen eine Schicht Erdreich 5 Halt findet. Auf diese Weise sind entlang den seitlichen Bordwänden 27 künstliche Flachufer gebildet.

Ferner sind bei dem dargestellten Ausführungsbeispiel eine Vorinsel 29 und eine Hinterinsel 30 an den Trägerkörper 3 angeschlossen. Die Vorinsel 29 und die Hinterinsel 30 enthalten ihrerseits Hohlräume bzw. Kammern, die zur Aufnahme von Zubehör- und Hilfseinrichtungen dienen. Die Vorinsel 29 und die Hinterinsel 30, die vorzugsweise schiffbaumässig ausgeführt sind, schliessen den Trägerkörper 3 vorn und hinten ab une ersetzen dabei stirnseitige Bordwände.

Das Erdreich 5, das sich auch auf die Oberfläche der Vorinsel 29 und der Hinterinsel 30 erstrecken kann, ist vorzugsweise mit Beimengungen geringen spezifischen Gewichts versehen, um den Gesamtschwerpunkt der Insel möglichst tief zu legen. So kann das Erdreich 5 ggf. von einer Mischung aus normaler Garten- oder Ackererde und Stoffen geringer Dichte, wie Braunkohle, Torf, Granulat. Kunststoffperlen und -hohlkörpern, gebildet sein, In Gegenden mit Frostgefahr kann das Erdreich 5 mit bis in die Tiefe des Bodenfrostes gezogenen Gräben versehen sein, die mit wasserabweisendem, elastischem Material geringen spezifischen Gewichts gefüllt sind.

Teile des Trägerkörpers 3, wie einzelne Kammern 10 der Rohre 20, gebildet durch Querschotte, können anfänglich mit Wasser gefüllt sein, das entsprechend dem pflanzlichen Wachstum abgelassen werden kann, um den sich durch das Pflanzenwachstum erhöhenden Gewicht der Insel Rechnung zu tragen, so dass diese immer im wesentlichen den gleichen Tiefgang bzw. Freibord hat.

Im übrigen können die Kammern 10 des Trägerkörpers 3 der Lagerhaltung verschiedener zu bevorratender Materialien dienen oder auch mit Gas als Notdepot gefüllt sein. Sofern einige der Kammern 10 als Wohnraum benutzt werden sollen, werden entsprechende Einstiegluken, Windhutzen od. dgl. vorgesehen.

Wenn auch bei dem dargestellten Ausführungsbeispiel die Rohre 20 mit einem runden Querschnitte gezeichnet sind, so versteht sich doch, dass die Rohre 20 auch einen anderen geeigneten Querschnitt, wie einen ovalen oder eckigen, insbesondere vier- oder sechseckigen, Querschnitt aufweisen können. Eckige Rohrquerschnitte empfehlen sich bei einer Einrichtung des Trägerkörpers 3 für einen Daueraufenthalt von Menschen. Ein endseitiger Übergang dieser Rohre in einen runden oder ovalen Ring erleichtert die Rohrmontage und eine Kombination von Rohren mit verschiedenen Querschnitten im Trägerkörper 3.

## Patentansprüche

1. Schwimmkörper, bestehend aus einem schwimmfähigen Trägerkörper (3) aus miteinander verbundenen, geschlössenen Rohren (20) für eine Abstützung eines Substrats zur Aufnahme von Pflanzen, dadurch gekennzeichnet, dass der Trägerkörper (3) im wesentlichen von parallelen, dicht nebeneinanderliegenden Rohren (20) gebildet ist, die im Bereich ihrer gemeinsamen waagrechten Durchmesserebene (21) mit längsverlaufenden wasserabweisenden Abdichtmitteln (22) beispielsweise in Form von Sonderbeton zwischen den einander gegenüberliegenden Rohraussenflächen versehen sind, die gemeinsam mit den Oberflächen der Abdichtmittel (22) zur Ausbildung des Schwimmkörpers als nutzbare Insel Verankerungszwickel (19) für auf dem Trägerkörper (3) als Substrat abgestütztes, bepflanzbares Erdreich (5) bilden, und dass der Trägerkörper (3) hochgezogene Bordwände (27) zur seitlichen Begrenzung des Erdreichs (5) aufweist.

2. Schwimmkörper nach Anspruch 1, dadurch gekennzeichnet, dass die Aussenseiten der Bordwände (27) mit zum Wasser leicht abfallenden Uferplatten (28) versehen sind.

3. Schwimmkörper nach Anspruch 1 oder 2, dadurch gekennzeichnet, dass das Erdreich (5) mit Beimengungen geringen spezifischen Gewichts versehen ist.

4. Schwimmkörper nach einem der Ansprüche 1 bis 3, dadurch gekennzeichnet, dass das Erdreich (5) mit bis in die Tiefe des Bodenfrostes gezogenen Gräben versehen ist, die mit wasserabweisendem, elastischem Material geringen spezifischen Gewichts gefüllt sind.

5. Schwimmkörper nach einem der Ansprüche 1 bis 4, dadurch gekennzeichnet, dass der Trägerkörper mit einer Vor- und/oder Hinterinsel (29, 30) zur Aufnahme von Zubehör- und Hilfseinrichtungen versehen ist.

6. Schwimmkörper nach einem der Ansprüche 1 bis 5, dadurch gekennzeichnet, dass der Trägerkörper von Rohren (20) mit eckigem Querschnitt oder von einer Kombination von Rohren mit eckigen und runden Querschnitten gebildet ist.

7. Schwimmkörper nach Anspruch 6, dadurch gekennzeichnet, dass die Rohre (20) mit eckigem Querschnitt an den Enden in einen runden oder ovalen Ring übergehen.

## Revendications

1. Elément flottant formé d'un élément de support flottable (3) constitué de tubes clos (20) reliés l'un à l'autre et destinés à supporter un substrat prévu pour recevoir des plantes, caractérisé en ce que l'élément de support (3) est formé essentiellement de tubes (20) parallèles, serrés les uns contre, qui, dans la zone de leur plan diamétral horizontal commun (21), sont pourvus de moyens d'étanchéité hydrophobes longitudinaux (22), par exemple en béton spécial, entre leurs surfaces tubulaires extérieures opposées qui, conjointement avec les surfaces des moyens d'étanchéité (22), pour la réalisation de l'élément flottant en tant qu'île exploitable, forment des écoinçons d'ancrage (19) pour de la terre (5) pouvant être garnie de plantes, supportée sur l'élément de support (3) en tant que substrat, et que l'élément de support (3) comporte des parois de bordage dressées vers le haut (27) pour confiner la terre (5) latéralement.

2. Elément flottant suivant la revendication 1, caractérisé en ce que les côtés extérieurs des parois de bordage (27) sont pourvus de plaques de rives (28) qui s'abaissent en pente douce vers l'eau.

3. Elément flottant suivant la revendication 2, caractérisé en ce que la terre (5) est additionnée de produits de pois spécifique faible.

4. Elément flottant suivant l'une quelconque des revendications 1 à 3, caractérisé en ce que la terre (5) est pourvue de'tranchées creusées jusqu'à la profondeur de gel, qui sont remplies d'une matière élastique hydrophobe de faible poids spécifique.

5. Elément flottant suivant l'une quelconque des revendications 1 à 4, caractérisé en ce que l'élément de support est pourvu d'une avant-île et/ou d'une arrière-île (29, 30) destinées à recevoir du matériel accessoire et de secours.

6. Elément flottant suivant l'une quelconque des revendicatons 1 à 5, caractérisé en ce que l'élément de support est formé de tubes (20) de section transversale polygonale ou d'une combinaison de tubes de sections transversales polygonale et ronde.

7. Elément flottant suivant la revendication 6, caractérisé en ce que les tubes (20) de section transversale polygonale se fondent, à leurs extrémités, dans un anneau rond ou ovale.

## Claims

1. A float consisting of a bouyant supporting member (3) composed of closed tubes (20) connected to one another, for supporting a substratum to receive plants, characterised in that the supporting member (3) is formed essentially from parallel tubes (20) which are situated close beside one another and are provided, in the region of their common horizontal diametral plane (21), with water-repellent sealing means (22) extending longitudinally, for example in the form of special concrete, between tube outer surfaces which are situated opposite one another and, together with the surfaces of the sealing means (22), form anchoring wedges (19) for soil (5) which can be planted and is supported, as a substratum, on the supporting member (3) in order to develop the float into a usable island, and in that the supporting member (3) comprises raised surrouding walls (27) to bound the soil (5) at the sides.

2. A float according to claim 1, characterised in that the outsides of the surrounding walls (27) are provided with shore plates (28) sloping gently down to the water.

3. A float according to claim 1 or 2, characterised in that the soil (5) is provided with admixtures of low specific gravity.

4. A float according to any one of claims 1 to 3, characterised in that the soil (5) is provided with trenches which are dug to the depth ot the ground frost and filled with water-repellent, resilient material of low specific gravity.

5. A float according to any one of claims 1 to 4, characterised in that the supporting member is provided with a fore-island and/or after-island (29, 30) to receive accessories and auxiliary appliances.

6. A float according to any one of claims 1 to 5, characterised in that the supporting member is formed from tubes (20) with an angular cross-section or from a combination of tubes with angular and round cross-sections.

7. A float according to claim 6, characterised in that the tubes (20) with an angular cross-secton verge into a round or oval ring at the ends.

FIG.3

FIG.1

EP 0 173 260 B1

FIG. 2